# EUROPÄISCHE PATENTSCHRIFT

(11) **EP 2 137 428 B1**
(45) Veröffentlichungstag und Bekanntmachung des Hinweises auf die Patenterteilung: **24.05.2017**
(21) Anmeldenummer: 08734639.1
(22) Anmeldetag: 18.03.2008
(51) Int. Cl.: F16D 65/56

(54) **HYDRAULISCH BETÄTIGTE SCHEIBENBREMSE MIT PARKBREMSEINRICHTUNG**
HYDRAULIC DISK BRAKE HAVING A PARKING BRAKE MECHANISM
FREIN À DISQUE À ACTIONNEMENT HYDRAULIQUE

(30) Priorität: 20.03.2007 DE 102007013851; 14.12.2007 DE 102007060270
(43) Veröffentlichungstag der Anmeldung: 30.12.2009
(73) Patentinhaber: KNORR-BREMSE Systeme für Nutzfahrzeuge GmbH, 80809 München (DE)
(72) Erfinder: PERICEVIC, Aleksandar, 80636 München (DE); BAUMGARTNER, Johann, 85368 Moosburg (DE); GEISSLER, Steffen, 85399 Hallbergmoos (DE); TRIMPE, Robert, 82234 Wessling (DE)
(74) Vertreter: Mattusch, Gundula
(86) Internationale Anmeldenummer: PCT/EP2008/002131
(87) Internationale Veröffentlichungsnummer: WO 2008/113551

(56) Entgegenhaltungen:
- EP-A- 0 249 522
- DE-A1- 4 121 054

## Beschreibung

Die Erfindung betrifft eine hydraulisch betätigte Scheibenbremse nach dem Oberbegriff des Anspruchs 1.

Die Erfindung befasst sich insbesondere mit einer gegenüber dem Stand der Technik vereinfachten und fehlersicheren Methode der Rückstellung der Bremskolben zum Bremsbelagwechsel.

Ein Kolben einer so genannten Kombibremse, welche über eine Parkbremsbetätigung und das zugehörige Verschleißnachstellsystem verfügt, ist z.B. im Bremsenhandbuch von Breuer/Bill, Friedr. Vieweg & Sohn Verlag, 3. Auflage im Abschnitt "7.2.1.6 - Kombinierter Faustsattel" beschrieben und bildlich dargestellt. Das Zurückstellen des Kolbens zum Bremsbelagwechsel erfordert ein Zurückschrauben der Nachstellmutter auf dem Gewinde der Nachstellschraube. Dieses Gewinde ist zwar nicht selbsthemmend, jedoch ist die Nachstellmutter über einen Reibkonus am Bremskolben an der Verdrehung behindert, damit im Parkbremsfall die Spannkraft über dieses Gewinde und den Reibkonus auf den Bremskolben übertragen werden kann. Das Zurückdrehen erfordert besondere Werkzeuge, und durch die Drehbewegung des Bremskolbens können die mit diesem in Kontakt stehenden Dichtungen (Kolbendichtring, Staubschutzkappe) in ihrer Wirkung beeinflusst oder beschädigt werden.

In der DE 196 04 402 ist eine Vorrichtung beschrieben, mit der die Notwendigkeit zum Zurückdrehen des Kolbens vermieden wird. Erschwerend ist bei dieser Lösung jedoch die Notwendigkeit für Betrieb und Service der Bremse unterschiedliche Schrauben in das zentrale Gewindedurchgangsloch im Kolbenboden einzusetzen. Hier besteht die Gefahr, dass die Serviceschraube nach dem Wartungsvorgang nicht entfernt wird, wodurch die Nachstellvorrichtung und damit letztlich die Parkbremse unwirksam gemacht wird.

Eine andere Lösung zur Vermeidung des Drehens des Kolbens zum Zurückstellen desselben wird z.B. in Bremsen der Bauart "Brembo" praktiziert. Bei diesen Bremsen ist der Kolbenboden mit einer großen Öffnung versehen, durch welche ein spezieller Rückstellkolben zugänglich ist. Zum Zurückstellen der Bremskolben wird dieser Rückstellkolben durch axiale Verschiebung mit der Nachstellmutter zur Übertragung einer Drehbewegung in Eingriff gebracht. Durch Drehen des Rückstellkolbens wird nun die Nachstellmutter zurückgeschraubt, wodurch bei gleichzeitigem Zurückdrücken des Bremskolbens die Rückstellung desselben möglich ist.

Eine weitere Bremse mit Rückstellkolben zum Zurückstellen der Nachstellvorrichtung ist aus EP0249522A1 bekannt.

Die beschriebenen Methoden werden an Faustsattelbremsen praktiziert. Bei Bremsen dieser Bauart muss der Bremssattel zum Bremsbelagwechsel demontiert werden, da ansonsten die Bremsbeläge für den Wechsel nicht zugänglich sind. Bei demontiertem Bremssattel sind die beschriebenen Arbeitsabläufe zur Rückstellung des Kolbens relativ bequem machbar, da ausreichender Raum zur Verfügung ist.

Bei schweren Nutzfahrzeugen werden vorzugsweise Rahmensattel angewendet, deren besonderer Vorteil darin besteht, dass der relativ schwere Bremssattel zum Bremsbelagwechsel nicht demontiert und von der Bremsscheibe abgenommen werden muss, weil die Bremsbeläge bequem durch die Rahmenöffnung des Bremssattels herausnehmbar sind. Zur Rückstellung der Bremskolben gibt es bei eingebauter Bremse wegen der häufig nicht gut zugänglichen Einbauposition der Bremse und dem geringen Abstand zwischen Bremsscheibe und dem Gehäuseteil des Rahmensattels sehr ungünstige Bedingungen. Die bisher beschriebenen Methoden sind nur sehr umständlich und zeitaufwändig durchzuführen, was zu erhöhten Servicekosten und auch zu Service Fehlern führt.

Vor diesem Hintergrund sollen ein Serviceverfahren und eine zugehörige Ausführung der Hydraulikbremse mit integrierter Parkbremse gefunden werden, bei welcher die Rückstellung der Bremskolben - vergleichbar der einfachen Hydraulikbremse - nur durch Zurückdrücken des Kolbens erfolgt.

Diese Aufgabe wird durch den Gegenstand des Anspruchs 1 gelöst.

Vorteilhafte Ausgestaltungen sind den Unteransprüchen zu entnehmen.

In einer nicht erfindungsgemäßen Ausführung liegt bei hydraulischer Betätigung der Bremse der Rückstellkolben unter Wirkung des Druckes an einer Anlegeschulter der Nachstellmutter an und hält damit gegen die Kraft der Rückstellfeder den Reibkontakt in der Konuskupplung zur Vermeidung einer Verdrehung der Nachstellmutter aufrecht. In Löserichtung der Konuskupplung hat der Rückstellkolben zur Nachstellmutter mit dem dazwischen angeordneten Axiallager in diesem Zustand einen geringen Abstand, der auch unter Berücksichtigung von Toleranzen und betriebsbedingten Verformungen ein Mindestspiel sichert. Auf der dem Bremsbelag zugewandten Seite weist der Rückstellkolben gegenüber der Anlagefläche in der Vertiefung des Kolbenbodens einen definierten Überstand auf.

Bei hydraulischer Betätigung der Bremse liegt der Rückstellkolben bei einer erfindungsgemäßen Variante unter Wirkung des Druckes an einer Anlegeschulter des Bremskolbens an. Zur Nachstellmutter hat der Rückstellkolben mit dem dazwischen angeordneten Axiallager in diesem Zustand einen geringen Abstand, der auch unter Berücksichtigung von Toleranzen und betriebsbedingten Verformungen ein Mindestspiel sichert. Auf der dem Bremsbelag zugewandten Seite weist der Rückstellkolben gegenüber der Anlagefläche in der Vertiefung des Kolbenbodens einen definierten Überstand auf.

Zum Zurückstellen des Kolbens wird ein Distanzstück in die Vertiefung des Kolbenbodens eingesetzt, welches sich auf der dem Kolben abgewandten Seite an der Bremsscheibe abstützt. Bei Mehrkolbenbremsen werden derartige Distanzstücke in alle Kolben eingesetzt. Jetzt wird der Schiebesattel in Richtung der Bremsscheibe verschoben. Das Distanzstück legt sich dabei an die Anlagefläche in der Vertiefung des Kolbenbodens an und drückt den Rückstellkolben zurück, bis dieser ebenfalls an der Anlagefläche anliegt. Bei dieser Rückwärtsverschiebung setzt der Rückstellkolben über das Axiallager an der Stirnfläche der Nachstellmutter auf und hebt diese mit ihrem Reibkonus von dessen Sitz im Kolben ab. Die Nachstellmutter verliert die Reibungshemmung und kann sich nun bei weiterem Zurückdrücken des Bremskolbens in dem nicht selbsthemmenden Gewinde der Nachstellschraube unter Einwirkung der Axialkraft zurückschrauben.

Die Rückstellung des Bremskolbens wird somit nach Einlegen des Distanzstückes durch einfaches Verschieben des Bremssattels erzielt.

Alternativ kann auch bei feststehendem Bremssattel durch Druck auf das Distanzstück die Kolbenrückstellung bewirkt werden.

Die Erfindung wird nun anhand von Ausführungsbeispielen mit Bezug auf die beigefügten Zeichnungen näher erläutert. Hierbei zeigt:
- Fig. 1: einen Abschnitt eines Ausführungsbeispiels einer erfindungsgemäßen hydraulisch betätigten Scheibenbremse mit Parkbremseinrichtung und Nachstelleinrichtung in einer Teilschnittansicht; und
- Fig. 2: eine weitere Teilschnittansicht der erfindungsgemäßen hydraulisch betätigten Scheibenbremse nach Fig. 1.

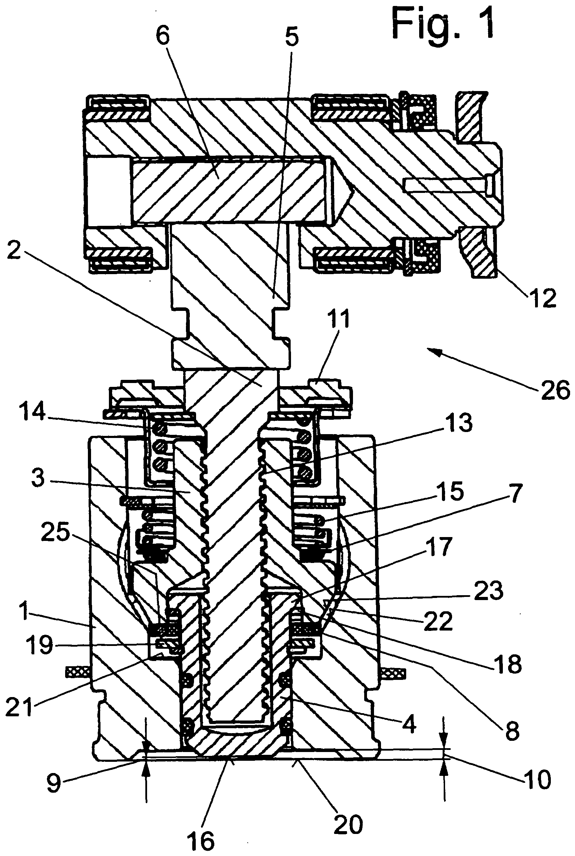

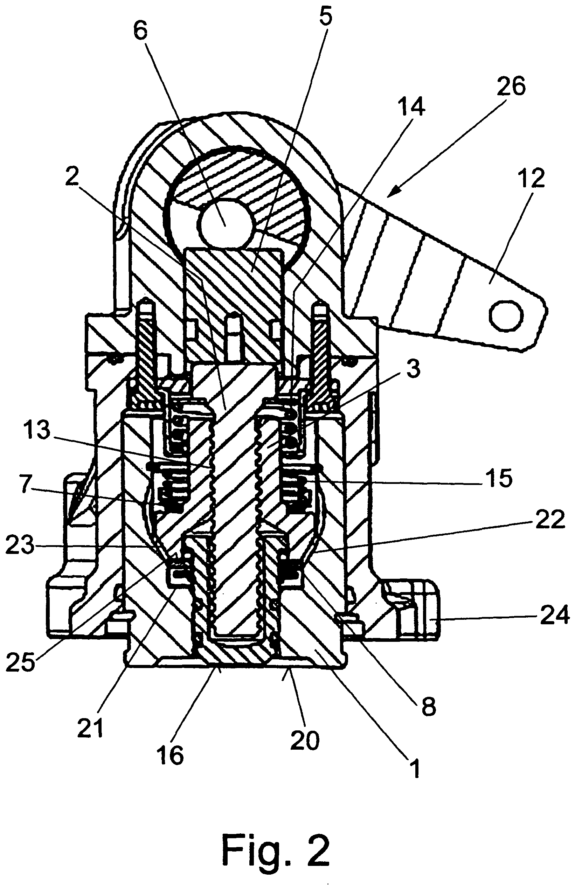

In Fig. 1 ist ein Ausführungsbeispiel einer erfindungsgemäßen hydraulischen Scheibenbremse mit einer Parkbremseinrichtung 26 und Nachstelleinrichtung in einer Teilschnittansicht dargestellt. Eine weitere Teilschnittansicht dazu zeigt Fig. 2.

Es wird Bezug auf Fig. 1 und 2 genommen. Die hydraulisch betätigte Scheibenbremse weist in diesem Beispiel einen Bremskolben 1 auf, welcher in einer Aufnahme eines Bremsengehäuses bzw. Bremssattels 24 (siehe Fig. 2) verschiebbar angeordnet ist. Das Bremsengehäuse 24 ist ein Bestandteil eines ansonsten nicht weiter dargestellten Bremssattels, welcher insbesondere als ein Festsattel oder ein Schiebesattel ausgebildet sein kann und vorzugsweise rahmenartige den oberen Rand einer Bremsscheibe umgreift.

Der Bremskolben 1 weist einen Kolbenboden 20 auf, welcher in Fig. 1 und 2 unten angeordnet ist und mit einem nicht gezeigten Bremsbelagträger mit einem zugehörigen Bremsbelag, welcher zur Anlage an einer ebenfalls nicht gezeigten Bremsscheibe ausgebildet und angeordnet ist, in Verbindung steht. Die Zustellrichtung des Bremskolbens 1 unter Einwirkung von Hydraulikdruck verläuft in Fig. 1 und 2 nach unten auf die nicht dargestellte Bremsscheibe zu. Die üblichen Anschlüsse für die Hydraulik zur Druckbeaufschlagung des Bremskolbens 1 sind nicht dargestellt.

Die Parkbremseinrichtung 26 steht mit dem Bremskolben 1 in Wirkverbindung.

Dazu weist die Parkbremseinrichtung 26 folgendes auf: einen mit einem Betätigungsexzenter 6 drehfest verbundenen Betätigungshebel 12 zum Auslösen einer Parkbremsung; einen mit dem Betätigungsexzenter 6 in Zusammenwirkung stehenden Druckkolben 5; eine drehfeste Nachstellschraube 2, auf welche der Druckkolben 5 einwirkt; und eine Nachstellmutter 3 welche auf einem nicht selbsthemmenden Gewinde 13 der Nachstellschraube 2 angeordnet ist. Die Nachstellschraube 2 erstreckt sich in axialer Längsrichtung des Bremskolbens 1 in eine Ausnehmung des Bremskolbens 1 hinein.

Die Nachstellmutter 3 weist an ihrem unteren Ende einen Reibkonus 23 auf, der mit einem korrespondierenden Reibkonus 22 im Bremskolben 1 zusammenwirkt und eine Reibkupplung 22, 23 bildet. Der Reibkonus 23 der Nachstellmutter 3 weist an seiner Unterseite eine Stirnfläche 25 auf, an welcher ein zweites Axialwälzlager 8 angeordnet ist.

Die Nachstellmutter 3 steht weiterhin mit einem ersten Axialwälzlager 7, einer Rückstellfeder 15, einer Druckfeder 14 und einer Verdrehsicherung 11 in Zusammenwirkung, wobei deren Funktionen im Zusammenhang mit einer Nachstellung des Bremskolbens 1 in Abhängigkeit vom Bremsbelagverschleiß hier nicht weiter beschrieben werden.

Der untere Endabschnitt der Nachstellmutter 3 mit dem Reibkonus 22 ist mit einer Ausnehmung versehen, in welcher ein oberer Abschnitt eines Rückstellkolbens 4 mit einem bestimmten Spiel axial verschiebbar angeordnet ist. Der Rückstellkolben 4 weist in diesem nicht erfindungsgemäßen Beispiel an seinem oberen Ende eine Schulter 17 auf, welche mit einer Anlegeschulter 18 der Nachstellmutter 3 zusammenwirkt. Hier ist die Anlegeschulter 18 der Nachstellmutter 3 als ein Bohrungssicherungsring ausgebildet. Im weiteren axialen Verlauf des Rückstellkolbens 4 ist unterhalb des zweiten Wälzlagers 8 eine Druckscheibe 19 in Form eines Laufrings am Rückstellkolben 4 befestigt, welche zur Zusammenwirkung mit dem zweiten Wälzlager 8 bestimmt ist. Diese Druckscheibe 19 ist in diesem Beispiel mit einem Wellensicherungsring am Rückstellkolben 4 in Axialrichtung nach unten festgelegt.

Der Rückstellkolben 4 erstreckt sich weiterhin mit einem unteren Abschnitt durch eine Durchführung durch den Kolbenboden 20 hindurch mit seiner Stirnseite 16 in eine Vertiefung 10, welche im Kolbenboden 20 eingebracht ist, hinein. Der untere Abschnitt des Rückstellkolbens 4 ist gegenüber dieser Durchführung im Kolbenboden 20 in geeigneter Weise abgedichtet, zum Beispiel mittels Dichtringen, und in der Durchführung axial verschiebbar. Der Rückstellkolben 4 ist so angeordnet, dass seine Stirnseite 16 in der Vertiefung 10 des Kolbenbodens 20 einen Überstand 9 zur Bodenseite der Vertiefung 10 bildet, wobei der Überstand 9 immer kleiner als das oder gleich dem Maß der Vertiefung 10 ist.

Bei einer hydraulischen Betätigung der Bremse bewegt sich der Bremskolben 1 in seiner Längsrichtung in Fig. 1, 2 nach unten auf die Bremsscheibe zu. Hierbei liegt der Rückstellkolben 4 unter Wirkung des Hydraulikdruckes in diesem Beispiel mit seiner Schulter 17 an der Anlegeschulter 18 der Nachstellmutter 4 an und hält damit gegen die Kraft der Rückstellfeder 15 den Reibkontakt in der Konuskupplung 22, 23 zur Vermeidung einer Verdrehung der Nachstellmutter 3 aufrecht. In Löserichtung der Konuskupplung 22, 23, das heißt in die Richtung (in Fig. 1 und 2 nach oben), welche entgegengesetzt zu der Bewegungsrichtung des Bremskolbens 1 bei hydraulischer Betätigung verläuft, weist der Rückstellkolben 4 zur Nachstellmutter 3 mit dem dazwischen angeordneten zweiten Axialwälzlager 8 in diesem Zustand der hydraulischen Betätigung einen geringen Abstand auf, der auch unter Berücksichtigung von Toleranzen und betriebsbedingten Verformungen ein Mindestspiel sichert. Auf der dem Bremsbelag zugewandten Seite weist der Rückstellkolben 4 gegenüber der Anlagefläche in der Vertiefung 10 des Kolbenbodens 20 den definierten Überstand 9 auf.

Im Folgenden wird die Funktion der Rückstellung des Bremskolbens 1 bei einem Bremsbelagwechsel erläutert.

Nach Entfernung des zum Bremskolben 1 gehörenden Bremsbelagträgers mit verschlissenem Bremsbelag wird zur Rückstellung des Bremskolbens 1 (in Fig. 1 und 2 in die Richtung nach oben) nun ein Distanzstück in die Vertiefung 10 des Kolbenbodens 20 eingesetzt, welches sich auf seiner dem Bremskolben 1 abgewandten Seite an der Bremsscheibe abstützt. Die andere Seite des Distanzstücks liegt dabei auf der Stirnseite 16 des Rückstellkolbens 4 auf. Bei Mehrkolbenbremsen werden derartige Distanzstücke jeweils in die Vertiefungen 10 aller Bremskolben 1 eingesetzt. Dann wird der Schiebesattel in Richtung der Bremsscheibe (in Fig. 1 und 2 nach unten) verschoben. Das Distanzstück drückt mit seiner an der Stirnseite 16 des Rückstellkolbens 4 liegenden Seite diesen soweit zurück, bis das Distanzstück an der Anlagefläche am Boden der Vertiefung 10 anliegt und die Stirnseite 16 des Rückstellkolbens 4 mit dieser Anlagefläche am Boden der Vertiefung 10 fluchtet. Bei dieser Rückwärtsverschiebung setzt der Rückstellkolben 4 in diesem Beispiel über die Druckscheibe 19 über das zweite Axialwälzlager 8 an der Stirnfläche 25 auf und hebt diese mit ihrem Reibkonus 23 von dessen Sitz von dem Reibkonus 22 des Bremskolbens 1 ab. Auf diese Weise verliert die Nachstellmutter 3 die Reibungshemmung und kann sich nun bei weiterem Zurückdrücken des Bremskolbens 1 in dem nicht selbsthemmenden Gewinde 13 der Nachstellschraube 2 unter Einwirkung einer Axialkraft, die durch das Verschieben des Bremssattels in Richtung der Bremsscheibe erzeugt wird, zurückschrauben.

In einer erfindungsgemäßen Ausführung kann der Rückstellkolben 4 bei hydraulischer Betätigung der Bremse unter Wirkung des Druckes an einer Anlegeschulter 21 des Bremskolbens 1 anliegen. Diese Anlage kann zum Beispiel über die Unterseite der Druckscheibe 19 in besonderer Gestaltung (wobei sie auf dem Rückstellkolben 4 axial in beiden Richtungen festgelegt ist) und/oder über den Wellensicherungsring erfolgen. Zur Stirnfläche 25 der Nachstellmutter 3 mit dem dazwischen angeordneten zweiten Axialwälzlager 8 in diesem Zustand einen geringen Abstand, der auch unter Berücksichtigung von Toleranzen und betriebsbedingten Verformungen ein Mindestspiel sichert. Dabei ist es wichtig, dass der Rückstellkolben 4 bei allen Betriebszuständen der Bremse die Konuskupplung 22, 23 nicht in ihrer Reibungshemmung beeinträchtigt, sondern nur in dem Fall die Reibungshemmung aufhebt, wenn das Distanzstück beim Rückstellvorgang in die Vertiefung 10 eingesetzt ist.

Die Rückstellung des Bremskolbens 1 wird somit nach Einlegen des Distanzstückes durch einfaches Verschieben des Bremssattels bzw. Schiebesattels erzielt. Danach wird das Distanzstück wieder aus der Vertiefung 10 entfernt.

Fig. 2 zeigt eine Teilschnittansicht nach Fig. 1 um 90° um die Längsachse des Bremskolbens 1 gedreht. Hier ist das Bremsengehäuse 24 mit zugehörigen Befestigungselementen für die Parkbremseinheit 26 zu erkennen. Die Parkbremsfunktion wird durch Betätigung des Betätigungshebels 12 in Schwenkrichtung gegen den Uhrzeigersinn aktiviert. Dabei wirkt der Betätigungsexzenter 6 auf den Druckkolben 5 dergestalt ein, dass eine Kraftübertragung in Axialrichtung des Bremskolbens 1 auf die Nachstellschraube 2 und über das Gewinde 13 auf die Nachstellmutter 3 über die Konuskupplung 22, 23 auf den Bremskolben 1 erfolgt. Diese Parkbremsfunktion wird durch den Rückstellkolben 4 nicht beeinträchtigt. Ebenfalls wird die Nachstellfunktion der Nachstelleinrichtung durch den Rückstellkolben 4 nicht beeinflusst. Das axiale Lager 7 kann auch als Gleitlager ausgebildet sein, was zum Beispiel in Fig. 2 schematisch angedeutet ist.

### Bezugszeichenliste

- 1: Bremskolben
- 2: Nachstellschraube
- 3: Nachstellmutter
- 4: Rückstellkolben
- 5: Druckkolben
- 6: Betätigungsexzenter
- 7: Erstes Axialwälzlager
- 8: Zweites Axialwälzlager
- 9: Überstand des Rückstellkolbens
- 10: Vertiefung im Kolbenboden
- 11: Verdrehsicherung
- 12: Betätigungshebel
- 13: Gewinde
- 14: Druckfeder
- 15: Rückstellfeder
- 16: Stirnseite Rückstellkolben
- 17: Schulter Rückstellkolben
- 18: Anlegeschulter Nachstellmutter
- 19: Druckscheibe
- 20: Kolbenboden
- 21: Anlegeschulter Bremskolben
- 22: Konuskupplung Reibkonus Bremskolben
- 23: Konuskupplung Reibkonus Nachstellmutter
- 24: Bremsengehäuses
- 25: Stirnfläche Nachstellmutter
- 26: Parkbremseinrichtung

## Patentansprüche

1. Hydraulisch betätigte Scheibenbremse mit wenigstens einem auf einen Bremsbelag einwirkenden und in einem Bremsengehäuse (24) angeordneten Bremskolben (1) und mit einer Parkbremseinrichtung (26), wobei in einen dem Bremsbelag zugewandten Kolbenboden (20) des Bremskolbens (1) ein Rückstellkolben (4) zum manuellen Rückstellen einer Nachstellvorrichtung und des Bremskolbens aufgenommen und in dem Kolbenboden (20) eine Vertiefung (10) ausgebildet ist, wobei die Parkbremseinrichtung (26) einen mit einem Betätigungsexzenter (6) drehfest verbundenen Betätigungshebel (12) zum Auslösen einer Parkbremsung, einen mit dem Betätigungsexzenter (6) in Zusammenwirkung stehenden Druckkolben (5), eine drehfeste Nachstellschraube (2), auf welche der Druckkolben (5) einwirkt, und eine Nachstellmutter (3) aufweist, welche auf einem nicht selbsthemmenden Gewinde (13) der Nachstellschraube (2) angeordnet ist und an ihrem einen dem Bremsbelag zugewandten Ende einen Reibkonus (23) aufweist, der mit einem korrespondierenden Reibkonus (22) im Bremskolben (1) zusammenwirkt und eine Reibkupplung (22, 23) bildet,
**dadurch gekennzeichnet,**
**dass** der Reibkonus (23) der Nachstellmutter (3) an seiner dem Bremsbelag zugewandten Unterseite eine Stirnfläche (25) aufweist, an welcher ein Axialwälzlager (8) angeordnet ist, und dass der Rückstellkolben (4) bei hydraulischer Betätigung der Bremse unter Wirkung des Druckes an einer Anlegeschulter (21) des Bremskolbens (1) anliegt, wobei der Rückstellkolben (4) in diesem Zustand zu der Nachstellmutter (3), bei dem dazwischen angeordneten Axialwälzlager (8), einen geringen Abstand aufweist, so dass unter Berücksichtigung von Toleranzen und betriebsbedingten Verformungen ein Mindestspiel gesichert ist, und wobei der Rückstellkolben (4) auf der dem Bremsbelag zugewandten Seite gegenüber der Anlagefläche in der Vertiefung (10) des Kolbenbodens (20) einen definierten Überstand (9) aufweist.

2. Hydraulisch betätigte Scheibenbremse nach Anspruch 1, **dadurch gekennzeichnet, dass** der untere, dem Bremsbelag zugewandte Endabschnitt der Nachstellmutter (3) mit dem Reibkonus (22) mit einer Ausnehmung versehen ist, in welcher ein oberer Abschnitt des Rückstellkolbens (4) mit einem bestimmten Spiel axial verschiebbar angeordnet ist.

3. Hydraulisch betätigte Scheibenbremse nach einem der vorstehenden Ansprüche, **dadurch gekennzeichnet, dass** sich die Nachstellschraube (2) in axialer Längsrichtung des Bremskolbens (1) in eine Ausnehmung des Bremskolbens (1) hinein erstreckt.

4. Hydraulisch betätigte Scheibenbremse nach einem der vorstehenden Ansprüche, **dadurch gekennzeichnet, dass** sich der Rückstellkolben (4) mit einem unteren, dem Bremsbelag zugewandte Abschnitt durch eine Durchführung durch den Kolbenboden (20) hindurch mit seiner Stirnseite (16) in die Vertiefung (10) im Kolbenboden (20) erstreckt.

5. Hydraulisch betätigte Scheibenbremse nach Anspruch 4, **dadurch gekennzeichnet, dass** der untere, dem Bremsbelag zugewandte Abschnitt des Rückstellkolbens (4) gegenüber der Durchführung im Kolbenboden (20) abgedichtet ist.

6. Hydraulisch betätigte Scheibenbremse nach Anspruch 4 oder 5, **dadurch gekennzeichnet, dass** der Rückstellkolben (4) in der Durchführung axial verschiebbar ist.

## Claims

1. Hydraulically actuated disc brake with at least one brake cylinder (1) that acts upon a brake lining and is arranged inside a brake housing (24) and with a parking brake device (26), such that in a base (20) of the brake piston (1) that faces toward the brake lining there is held a resetting piston (4) for the manual resetting of an adjustment device and of the brake piston, and a recess (10) is formed in the base (20) of the piston, wherein the parking brake device (26) comprises an actuating lever (12) connected in a rotationally fixed manner to an actuating eccentric (6) for actuating a parking brake, a pressure piston (5) that co-operates with the actuating eccentric (6), a rotationally fixed adjusting screw (2) upon which the pressure piston (5) acts, and an adjusting nut (3) which is arranged on a non-self-locking thread (13) of the adjusting screw (2) and which, at one of its ends facing toward the brake lining, has a friction cone (23) that co-operates with a corresponding friction cone (22) in the brake piston (1) to form a friction clutch (22, 23),
**characterised in that**
on its underside facing toward the brake lining the friction cone (23) of the adjusting nut (3) has an end face (25) on which is arranged an axial roller bearing (8) and when the brake is actuated hydraulically, under the action of the pressure the resetting piston (4) comes in contact with a contact shoulder (21) of the brake piston (1), so that in this condition by virtue of the axial roller bearing (8) between them the resetting piston (4) is a small distance away from the adjusting nut (3), such that having regard to tolerances and operational deformations a minimum clearance is ensured, and so that on its side facing toward the brake lining the resetting piston (4) has a defined overlap (9) relative to the contact surface in the recess (10) of the piston base (20).

2. Hydraulically actuated disc brake according to Claim 1, **characterised in that** the lower end section of the adjusting nut (3) facing toward the brake lining with the friction cone (22) is provided with a recess, in which an upper section of the resetting piston (4) is arranged and can move axially with a certain clearance.

3. Hydraulically actuated disc brake according to either of the preceding claims, **characterised in that** in the axial longitudinal direction of the brake piston (1) the adjusting screw (2) extends into a recess of the brake piston (1).

4. Hydraulically actuated disc brake according to any of the preceding claims, **characterised in that** a lower section of the resetting piston (4) facing toward the brake lining extends through a passage in the piston base (20) with its end face, into the recess (10) in the piston base (20).

5. Hydraulically actuated disc brake according to Claim 4, **characterised in that** the lower section of the resetting piston (4) facing toward the brake lining is sealed against the passage in the piston base (20).

6. Hydraulically actuated disc brake according to Claims 4 or 5, **characterised in that** the resetting piston (4) can move axially within the passage.

## Revendications

1. Frein à disque à actionnement hydraulique, comprenant au moins un piston (1) de frein agissant sur une garniture de frein et disposé dans un boîtier (24) de freinage et comprenant un dispositif (26) de frein de stationnement, dans lequel il est reçu dans un fond (20), tourné vers la garniture de frein, du piston (1) de frein, un piston (4) de rappel pour le rappel manuel d'un dispositif de rattrapage et du piston de frein et il est constitué une cavité (10) dans le fond (20) du piston, le dispositif (26) de frein de stationnement ayant un levier (12) d'actionnement, solidaire en rotation d'un excentrique (6) d'actionnement, pour le desserrage d'un freinage de stationnement, un piston (5) de pression en coopération avec l'excentrique (6) d'actionnement, une vis (2) de rattrapage, fixe en rotation, sur laquelle agit le piston (5) de pression, et un écrou (3) de rattrapage, qui est monté sur un filetage (13) non-autobloquant de la vis (2) de rattrapage et qui a, à son extrémité tournée vers la garniture de frein, un cône (23) de friction, qui coopère avec un cône (22) de friction correspondant du piston (1) de frein et forme un embrayage (22, 23) à friction,
**caractérisé**
**en ce que** le cône (23) de friction de l'écrou (3) de rattrapage a, du côté inférieur tourné vers la garniture de frein, une face (25) frontale, sur laquelle est disposé un palier (8) à roulement axial, et en ce que le piston (4) de rappel s'applique, lors de l'actionnement hydraulique du frein sous l'action de la pression, à un épaulement (21) d'application du piston (1) de frein, le piston (4) de rappel ayant, dans cet état, par rapport à l'écrou (3) de rattrapage, alors que le palier (8) à roulement axial est disposé entre eux, une distance petite, de sorte que, en tenant compte de tolérances et de déformations dues au fonctionnement, un jeu minimum est assuré et dans lequel le piston (4) de rappel a, du côté tourné vers la garniture de frein, par rapport à la surface d'application, dans la cavité (10) du fond (20) du piston, un dépassement (9) défini.

2. Frein à disque à actionnement hydraulique suivant la revendication 1, **caractérisé en ce que** la partie d'extrémité inférieure et tournée vers la garniture de frein de l'écrou (3) de rattrapage est pourvue d'un cône (22) de friction ayant un évidement, dans lequel une partie supérieure du piston (4) de rappel est montée coulissante axialement avec un jeu déterminé.

3. Frein à disque à actionnement hydraulique suivant l'une des revendications précédentes, **caractérisé en ce que** la vis (2) de rattrapage s'étend, dans la direction longitudinale axiale du piston (1) de frein, dans un évidement du piston (1) de frein.

4. Frein à disque à actionnement hydraulique suivant l'une des revendications précédentes, **caractérisé en ce que** le piston (4) de rappel, ayant un tronçon inférieur tourné vers la garniture de frein, s'étend, par son côté (16) frontal, dans la cavité (10) du fond (20) du piston, en passant par un passage dans le fond (20) du piston.

5. Frein à disque à actionnement hydraulique suivant la revendication 4, **caractérisé en ce que** le tronçon inférieur et tourné vers la garniture de frein du piston (4) de rappel est rendu étanche par rapport au passage dans le fond (20) du piston.

6. Frein à disque à actionnement hydraulique suivant la revendication 4 ou 5, **caractérisé en ce que** le piston (4) de rappel peut coulisser axialement dans le passage.
